(19) Europäisches Patentamt

European Patent Office

Office européen des brevets

(11) **EP 0 963 412 B1**

(12) **FASCICULE DE BREVET EUROPEEN**

(45) Date de publication et mention
de la délivrance du brevet:
**23.06.2004 Bulletin 2004/26**

(51) Int Cl.[7]: **C08L 67/02**
// C08L67:02, C08L23:08

(21) Numéro de dépôt: **98964532.0**

(22) Date de dépôt: **28.12.1998**

(86) Numéro de dépôt international:
**PCT/FR1998/002892**

(87) Numéro de publication internationale:
**WO 1999/033917 (08.07.1999 Gazette 1999/27)**

(54) **PIECES INJECTEES EN POLYESTER ET RESISTANT AU CHOC**

SCHLAGZÄHE SPRITZGUSSTEILE AUS POLYESTER

SHOCKPROOF POLYESTER-INJECTED PARTS

(84) Etats contractants désignés:
**AT BE CH DE DK ES FI FR GB GR IE IT LI LU NL
PT SE**

(30) Priorité: **29.12.1997 FR 9716612**

(43) Date de publication de la demande:
**15.12.1999 Bulletin 1999/50**

(73) Titulaire: **Atofina**
**92800 Puteaux (FR)**

(72) Inventeurs:
• PERRET, Patrice
**F-78970 Mézières sur Seine (FR)**

• KOMORNICKI, Jacques
**F-69340 Francheville (FR)**
• MIYAKI, Yoshiyuki
**Otsu-shi, Shiga 520-21 (JP)**

(74) Mandataire: **Neel, Henry**
**Atofina**
**D.C.R.D./D.P.I.**
**4, Cours Michelet,**
**La Défense 10**
**92091 Paris La Défense Cedex (FR)**

(56) Documents cités:
**EP-A- 0 481 471        EP-A- 0 536 966**
**EP-A- 0 747 070**

## Description

La présente invention concerne des pièces injectées en polyester et résistant au choc et plus particulièrement des pièces injectées à base de polyester (A) et d'au moins un copolymère (B) de l'éthylène et d'un époxyde insaturé, le copolymère (B) étant obtenu par copolymérisation ou greffage de l'époxyde insaturé.

L'amélioration des résistances aux chocs des polyesters est obtenue généralement par incorporation sous forme d'une phase dispersée d'un modifiant choc qui présente un caractère élastomérique et des fonctions réactives (acide acrylique, anhydride maléique, ...) susceptibles de réagir avec des groupements fonctionnels de la matrice polyester. Cette réactivité permet d'assurer une dispersion fine et homogène de l'élastomère, une bonne adhésion à l'interface nodule matrice mais conduit à une baisse importante de la fluidité. Cette forte évolution de la viscosité est nuisible à la mise en oeuvre, spécialement pour les pièces injectées fines ou de grandes dimensions.

La demanderesse a découvert qu'en utilisant des compositions à base de résine polyester et d'au moins un copolymère de l'éthylène et d'un époxyde insaturé on pouvait obtenir à ta fois une résistance au choc et une bonne fluidité permettant l'injection de ces compositions pourvu qu'on choisisse les quantités de copolymères et le taux d'époxyde du copolymère.

L'art antérieur a déjà décrit des compositions résistant au choc à base de polyester.

US 4,172,859 décrit des polyesters modifiés par des copolymères réactifs pour augmenter la résistance au choc. La matrice de polyester contient des nodules de 0,01 à 3 microns de copolymère réactif ; le copolymère réactif doit adhérer en partie à la matrice, son module de traction est compris entre 1 et 20000 psi (0,007 et 140 MPa) et le rapport du module de traction de la matrice au module de traction du copolymère réactif est supérieur à 10. Le copolymère réactif peut contenir jusqu'à 50 % en moles de méthacrylate de gycidyle.

Il n'est rien écrit sur la viscosité des polyesters ainsi modifiés. US 4,753,980 décrit des polyesters tels que par exemple du polyéthylène téréphtalate (PET) ou du polybutylène téréphtalate (PBT) modifiés par des copolymères de l'éthylène, d'un (méth)acrylate d'alkyle et du (méth)acrylate de glycidyle. Le tableau 1 montre du PET ou du PBT contenant 18 % de copolymère. On considère que les copolymères contenant de 2,25 à 8,6 % en poids de méthacrylate de glycidyle (GMA) conviennent pour l'invention. Il n'est rien écrit sur la viscosité.

US 5,208,292 décrit des PET et des PBT modifiés par un mélange de copolymères qui réticulent. On y décrit un PBT contenant un mélange d'un copolymère ayant des motifs GMA et d'un copolymère ayant des motifs anhydride maléique. Il est souligné que l'incorporation d'un mélange ainsi réticulé dans le PBT permet d'éviter une chute importante de l'indice de fluidité ou MFI (MFI ou Melt flow index qui désigne l'indice d'écoulement à l'état fondu). L'exemple comparatif 1 montre qu'un mélange de 80 parties de PBT de MFI 79,3 (250°C sous 5 kg) et de 20 parties d'un copolymère éthylène/acrylate d'éthyle/GMA de MFI 11 (190°C 2,16 kg) et contenant 12 % en poids de GMA conduit à un PBT modifié de MFI : 1,7 (250°C 5 kg) ce qui rend impossible l'injection de pièces.

EP-A 536 966 décrit un procédé de fabrication d'une composition plastique cristalline renforcée comprenant en mélange un polyester (A), des fibres de verre (B) et un copolymère (C) d'éthylène contenant un groupe époxyde tel que le méthacrylate de glycidyle (GMA) ou un groupe anhydride d'acide. Il n'est pas divulgué que le copolymère (C) comporte un mélange avec une polyoléfine.

EP-A 481 471 décrit des compositions comprenant en mélange un polyester aromatique tel que le PET (polyéthylène téréphtalate), un polyéthylène haute densité et un copolymère élastomère d'éthylène et d'esters (méth) acryliques comprenant une fonction époxyde telle que le GMA. Aucune valeur du MFI n'est indiquée dans les exemples des compositions.

Ainsi l'art antérieur a montré des polyesters modifés par des copolymères contenant du GMA mais ne s'est pas intéressé à la fluidité des polyesters ainsi modifiés. Les essais et les mesures des propriétés de ces polyesters modifiés ont été faits sur des éprouvettes faites par moulage ou injection.

Il est clair que sur de telles dimensions et dans des conditions de laboratoire, la viscosité est sans importance.

Il en est tout autrement pour les pièces fines ou de plus grandes dimensions ou encore de forme compliquée, ces pièces devant être produites à des cadences industrielles.

L'avantage des compositions de l'invention est le compromis entre la résistance au choc et la viscosité.

US 5,208,292 résout en partie te problème de la baisse de fluidité mais au prix d'un mélange de copolymères à réticuler ce qui oblige à doser correctement les produits selon les quantités de fonctions réactives qu'ils contiennent.

Un autre avantage de l'invention est qu'il suffit d'ajouter un seul produit dans la résine polyester et non un mélange de différents produits. Un autre avantage est qu'il suffit d'ajouter le copolymère d'éthylène et d'un époxyde insaturé dans l'extrudeuse qui alimente le dispositif d'injection. Cet ajout peut être fait par une extrudeuse latérale ou un doseur de granulés sur l'extrudeuse de polyester. Il n'est donc pas nécessaire de préparer à l'avance le mélange de la résine polyester et du renforçant choc.

La présente invention concerne des pièces injectées en polyester, selon la revendication 1.

Dans cette expression MFI (A + B + C) désigne l'indice de fluidité du polyester modifié c'est-à-dire du mélange de (A), (B) et (C) et les charges éventuelles telles que les fibres de verre, les ignifugeants, les antioxydants... , et MFI (A) désigne l'indice de fluidité des mêmes compositions mais ne contenant pas (B) c'est-à-dire que MFI (A) désigne l'indice de fluidité du polyester seul ou du polyester chargé de fibres de verre et éventuellement des ignifugeants et des antioxydants...

Le terme polyester désigne des polymères qui sont des produits saturés de condensation de glycols et d'acides dicarboxyliques ou de leurs dérivés. De préférence ils comprennent les produits de condensation d'acides dicarboxyliques aromatiques ayant de 8 à 14 atomes de carbone et d'au moins un glycol choisi parmi le groupe constitué du neopentylglycol, du cyclohexanediméthanol et des glycols aliphatiques de formule $HO(CH_2)_nOH$ dans laquelle n est un entier valant de 2 à 10. Jusqu'à 50 % en mole de l'acide aromatique dicarboxylique peut être remplacé par au moins un autre acide aromatique dicarboxylique ayant de 8 à 14 atomes de carbone, et/ou jusqu'à 20 % en mole peut être remplacé par un acide aliphatique dicarboxylique ayant de 2 à 12 atomes de carbone.

Les polyesters préférés sont le polyéthylène téréphtalate (PET), le poly(1,4-butylène) téréphtalate (PBT), le 1,4-cyclohexylène diméthylène téréphtalate/isophtalate) et d'autres esters dérivés d'acides aromatiques dicarboxyliques tels que l'acide isophtalique, bibenzoïque, naphtalène dicarboxylique, l'acide 4,4'-diphénylenedicarboxylique, l'acide bis(p-carboxyphényl) méthane, l'éthylène bis p-benzoïque acide, l'acide 1-4 tétraméthylène bis(p-oxybenzoïque), l'acide éthylène bis (para oxybenzoïque), l'acide 1,3-triméthylène bis (p-oxybenzoique) et des glycols tels que l'éthylène glycol, le 1,3 triméthylène glycol, le 1,4-tétraméthylèneglycol, le 1,6-hexaméthylène glycol, le 1,3 propylène glycol, le 1,8 octaméthylèneglycol, le 1,10-decaméthylène glycol. Le MFI de ces polyesters, mesuré à 250°C sous 2,16 kg, peut varier de 2 à 100 et avantageusement de 10 à 80.

Les copolymères (B) et (B1) de l'éthylène et d'un époxyde insaturé peuvent être obtenus par copolymérisation de l'éthyléne et d'un époxyde insaturé ou par greffage de l'époxyde insaturé sur le polyéthylène. Le greffage peut être effectué en phase solvant ou sur le polyéthylène en fusion en présence d'un péroxyde. Ces techniques de greffage sont connues en elles-mêmes. Quant à la copolymérisation de l'éthylène et d'un époxyde insaturé, on peut utiliser les procédés dits de polymérisation radicalaire fonctionnant habituellement à des pressions entre 200 et 2 500 bars.

A titre d'exemple d'époxydes insaturés, on peut citer :

- les esters et éthers de glycidyle aliphatiques tels que l'allylglycidyléther, le vinyl glycidyléther, le maléate et l'itaconate de glycidyle, le (méth)acrylate de glycidyle, et,
- les esters et éthers de gycidyle alicycliques tels que le 2-cyclohexène-1-glycidyléther, le cyclohexène-4,5-diglycidyl carboxylate, le cyclohexène-4-glycidyl carboxylate, le 5-norbornène-2-méthyl-2-glycidyl carboxylate et l'endo cis-bicyclo(2,2,1)-5-heptène-2,3-diglycidyl dicarboxylate.

Le copolymère d'éthylène et d'époxyde insaturé peut comprendre aussi d'autres monomères pouvant être choisis par exemple parmi :

- les alphaoléfines telles que le propylène, le butène-1, l'hexène...
- les esters vinyliques d'acides carboxyliques saturés tels que l'acétate de vinyle ou le propionate de vinyle
- les esters d'acide carboxyliques saturés tels que les (méth)acrylates d'alkyle pouvant avoir jusqu'à 24 carbones.

A titre d'exemple on peut greffer l'époxyde insaturé sur les polymères suivants :

- le polyéthylène, les copolymères de l'éthylène et d'une alphaoléfine, les polyéthylènes tels que le VLDPE (PE très basse densité), le ULDPE (PE ultra basse densité) ou le PE métallocène ;
- les copolymères de l'éthylène et au moins un ester vinylique d'acide carboxylique saturé tel que l'acétate de vinyle ou le propionate de vinyle
- les copolymères de l'éthylène et d'au moins un ester d'acide carboxylique insaturé, tels que les (méth)acrylates d'alkyle pouvant avoir jusqu'à 24 carbones;
- les élastomères EPR (éthylène/propylène rubber) ou les EPDM (éthylène/propylène/diène) ;
- des mélanges de polymères choisis parmi les précédents.

La quantité de copolymère (B) peut varier dans de larges limites selon les propriétés qu'on demande au mélange de (A) et (B), des quantités jusqu'à 25 % en poids de (A) + (B) sont cependant suffisantes et avantageusement entre 10 et 20 %.

La demanderesse a découvert qu'à teneur identique en époxyde et en faisant varier la quantité de copolymère (B) de 10 à 20 % le gain obtenu au-delà de 15 % était beaucoup plus faible que le gain obtenu quand on passe de 10 à 15 % alors que l'indice de fluidité chutait fortement.

La demanderesse a aussi découvert qu'à quantité de copolymère (B) constante, la résistance au choc n'était absolument pas proportionnelle à la quantité d'époxyde dans le copolymère (B).

La demanderesse a trouvé que pour respecter le critère % poids (B) x MFI (A + B) / MFt (A) > 3 il suffisait de choisir (B) contenant une quantité d'époxyde jusqu'à 5 % en poids et de préférence de 1 à 3 %.

Avantageusement la quantité de (B) est de 10 à 20 % en poids de (B) + (A).

Le copolymère (B) des pièces injectées de l'invention est avantageusement un copolymère éthylène/(méth) acrylate d'alkyle/époxyde insaturé.

Avantageusement il peut contenir jusqu'à 40 % en poids de (méth)acrylate d'alkyle.

L'époxyde est avantageusement le (méth)acrylate de glycidyle.

Avantageusement le (méth)acrylate d'alkyle est choisi parmi le (méth)acrylate de méthyle, l'acrylate d'éthyle, l'acrylate de n-butyle, l'acrylate d'isobutyle, l'acrylate de 2-éthylhexyle.

La quantité de (méth)acrylate d'alkyle est avantageusement de 20 à 35 %.

Le MFI de (B) est avantageusement compris entre 2 et 40 et de préférence de 5 à 20 (190°C - 2,16 kg).

Ce copolymère peut être obtenu par polymérisation radicalaire des monomères.

Le polyester (A) peut contenir des fibres de verre. La quantité de fibres de verre peut être jusqu'à 35 parties pour 65 parties de (A). On utilise avantageusement des quantités de 20 à 30 parties pour respectivement 80 à 70 parties de (A).

Selon la forme préférée de l'invention le copolymère (B) peut être constitué d'un copolymère éthylène-époxyde insaturé (B1) en mélange avec une polyoléfine (C). La quantité d'époxyde dans (B1) peut être quelconque pourvu que le critère % poids (B1 + C) MFI (A + B1 + C) / MFI (A) > 3 soit respecté.

(B1) peut être choisi parmi les mêmes polymères cités pour (B) et de préférence les copolymères éthylène - (méth)acrylate d'alkyle - epoxyde insaturé.

La quantité d'époxyde de (B1) peut être plus importante que celle de (B) par exemple jusqu'à 10 % en poids. Il s'agit en fait d'une dilution de (B1) par (C). La quantité d'époxyde en % poids de (B1) + (C) est dans les mêmes proportions que celle de (B).

La polyoléfine (C) peut être choisie parmi les polymères cités plus haut et sur lesquels on pouvait greffer un époxyde insaturé.

De préférence (C) est un polymère de l'éthylène et d'un (méth)acrylate d'alkyle. Le (méth)acrylate d'alkyle peut être choisi parmi ceux cités plus haut dans la description de (B). Le MFI de (C) est avantageusement compris entre 2 et 40 et de préférence de 5 à 20 (190°C - 2,16 kg). Les proportions de (B1) et (C) dépendent de la quantité d'époxyde dans (B1). A titre d'exemple et pour des quantités d'époxyde de l'ordre de 5 à 8 % en poids de (B1) les proportions de (B1) et (C) sont dans des rapports

$$\frac{(B1)}{C} \quad \frac{12}{8} \text{ à } \frac{8}{12} \text{ ou } \frac{40}{60} \text{ à } \frac{10}{90}$$

On ne sortirait pas du cadre de l'invention en ajoutant des charges minérales (talc, $Ca_3CO$, Kaolin...), des renforts (fibre de verre, fibre minérale, fibre de carbone,...), des stabilisants (thermique, UV), des agents ignifugeants et des colorants.

Les compositions de l'invention se préparent par les techniques habituelles des thermoplastiques telles que par exemple l'extrusion ou les mélangeurs bivis.

## **Exemples**

Réalisation des essais

■ Compoundage

Les compositions sont obtenues par compoundage sur une extrudeuse double vis L/D 40 munie d'un système de dégazage et d'une coupe à jonc, avec un débit de 12 kg/h et une vitesse de 300 tours/mn. Les profils de température utilisés sont les suivants :

Base PBT = 220 / 230 / 240 / 250 / 250°C

Base PBT + fibre de verre = 230 / 240 / 250 / 250 /

250°C.

Soit les composants en granulés sont mélangés à sec puis introduits dans la trémie d'alimentation, soit la base PBT est introduite dans la trémie d'alimentation et le modifiant choc en zone fondue. Les deux procédés conduisent à des performances finales identiques.

■ Moulage des échantillons

Les granulés sont séchés sous pression réduite à une température de 80°C puis sont moulés par injection sur une presse à injecter tye Krauss Maffei B1 (60 T de fermeture) dans les conditions suivantes :

Base Polyester

- Température matière 240-260°C, moule 50°C
- Pression d'injection 500-600 bars
- Pression de maintien 300 bars

Base Polyester + fibre de verre

- Température matière 240-280°C, moule 50°C
- Pression d'injection 500-600 bars
- Pression de maintien 400 bars.

Les éprouvettes normalisées (80 x 10 x 4 mm$^3$) ainsi obtenues sont conditionnées pendant 14 jours à 23°C et 50 % d'humidité relative.

**Evaluation**

- Module de flexion selon la norme ISO 178
- Résistance aux chocs sur des éprouvettes préalablement entaillées du type CHARPY selon la norme ISO 179 93 1 Ae à différentes températures (23°C, -20°C).
  Lorsque la fissure parcourt moins de 90 % de l'épaisseur en fond d'entaille de l'échantillon, la mention non casse (NB) est utilisée. La valeur de l'énergie mesurée est néanmoins indiquée pour information, sans toutefois pouvoir être interprétée compte tenu des déformations élastiques subies par l'échantillon et des frottements entre l'échantillon et le porte échantillon.
- Indice de fluidité (MFI) mesuré selon la norme ISO 1133 à une température de 250°C et sous un poids de 2,16 kg.

■ Matières utilisées

Différentes résines de base PBT ont été utilisées :

PBT MFI 10 : Pibiter N 100 d'Enichem (I)
PBT MFI 20 : Pibiter N 400 d'Enichem (I)
PBT MFI 45 : Teijin TRB - J de Teijin (J)
PBT MFI 70 : Duranex 2000 de Polyplastics (J)

(MFI 250°C - 2,16 kg)
Différents modifiants chocs ont été évalués :

Elastomère acrylique Core -Shell : Paraloid EXL 2300 de Rohm & Haas
Elastomère Core Shell MBS : Paraloid EXL 2647 de Rohm & Haas
Terpo 1 : Copolymère E/EA/GMA 72/24/8 MF16
Terpo 2 : Copolymère E/MA/GMA 72/24/8 MF16
Terpo 3 : Copolymère E/ABu/GMA 65/30/5 MF16
Terpo 4 : Copolymère E/ABu/GMA 67,5/30/2,5 MF16
Terpo 5 : Copolymère E/MA/GMA 75/24/1 MF16
Terpo 6 : Copolymère E/MA/GMA 67/30/3 MF19
Copo 1 : Copolymère E/MA 71/29 MF13

(MFI 190°C / 2,16 kg)

Ces copolymères sont fabriqués par catalyse radicalaire haute pression

E désigne l'éthylène

EA désigne l'acrylate d'éthyle

MA désigne l'acrylate de méthyle

ABu désigne l'acrylate de butyle

GMA désigne le méthacrylate de glycidyle

.../.../... désigne les proportions en poids des constituants.

Les produits désignés Terpo 1 à Terpo 5 sont vendus par ELF ATOCHEM sous la référence LOTADER AX, le produit Terpo 6 est vendu par SUMITOMO sous la référence BONDFAST, le produit Copo 1 est vendu par ELF ATOCHEM sous la référence LOTRYL.

Tableau 1

ex. comparatif 1 base PBT MFI 20

ex. comparatifs 2 et 3 : composition PBT à 20 % de modifiant choc du type élastomère Core Shell (acrylique au MBS). A 20 % de modifiant choc, les compositions conservent une bonne fluidité mais les niveaux de résistance aux chocs ne sont pas suffisamment élevés pour répondre à certains cahiers des charges.

ex. comparatifs 4, 5, 6, 7, 8, 9 : compositions PBT à 10-15-20 % de Terpo GMA fortement réactif.

Ces terpo GMA permettent d'obtenir des résistances aux chocs satisfaisantes, spécialement lorsque la teneur en modifiant est supérieure ou égale à 15 %. Toutefois, l'augmentation de la viscosité est telle que les compositions ne peuvent être injectées correctement.

ex. 1, 2, 3 : composition PBT à 20 % Terpo GMA de réactivité moyenne (Terpo 3-4) ou faible (Terpo 5).

Ces Terpo GMA permettent d'obtenir d'excellentes résistances aux chocs tout en conservant une fluidité satisfaisante pour assurer une mise en oeuvre aisée en injection.

ex. 4, 5, 6 : composition PBT à 10-15-20 % Terpo GMA de réactivité moyenne (Terpo 4).

Les caractéristiques de compromis résistances aux choc / fluidité sont conservées sur une large gamme de teneur en modifiant choc -10-20 %).

Tableau 2

ex. comparatifs 10, 11 : compositions PBT + 15-20 % Terpo 2

Exemples comparatifs similaires aux ex. comparatifs 8, 9 mais avec une base PBT plus fluide (MFI 70). De façon identique les résistances aux chocs sont excellentes mais l'évolution de la viscosité par rapport à la base PBT est trop importante.

ex. 7, 8, 9, 10 : compositions PBT + 15-20 % Terpo 5 ou 6

Les Terpo GMA à faible teneur en GMA (Terpo 5 des exemples 7, 8) ou à moyenne teneur en GMA (Terpo 6 des exemples 9, 10) permettent d'avoir des résistances aux chocs satisfaisantes tout en ayant une évolution de la viscosité par rapport à la base nettement moindre permettant d'injecter les compositions correctement.

ex. 11, 12 : compositions PBT + 10 % Terpo 5 ou 6

Les exemples 11 et 12 sont similaires aux exemples 7 et 9 mais où la vitesse de rotation de l'extrudeuse double vis à été augmentée de 300 à 450 tours/minute (RPM) (à débit constant). Cette évolution a permis d'augmenter sensiblement la résistance aux chocs tout en conservant une évolution de la viscosité satisfaisante.

Tableau 3 regroupe notamment les examples 14 à 20 illustrant plus particulièrement l'invention.

ex. comparatif 12 exemple similaire à l'exemple comparatif 8 mais avec une basse PBT plus visqueuse (MFI 10).

Le terpolymère GMA fortement réactif (Terpo 2) conduit à des résistances aux chocs excellentes mais l'évolution de la viscosité par rapport à la base est toujours très importante.

ex. 13 : exempte similaire à l'exemple 2 ; là encore le Terpo GMA moyennement réactif (Terpo 4) permet d'obtenir un meilleur compromis résistance aux chocs / fluidité.

ex. 14, 15, 16, 17 : compositions PBT + Terpo GMA + Copo en mélange à sec.

La dilution d'un Terpo GMA fortement réactif (Terpo 2 des exemples 14, 15) ou moyennement réactif (Terpo 4 des exemples 16, 17) dans un copolymère E-MA non réactif (Copo 1) permet également de limiter l'évolution de la fluidité par rapport aux mélanges binaires PBT / Terpo GMA (exemple comparatif 12 - exemple 13) tout en conservant des résistances excellentes.

<u>ex. 18, 19, 20</u> : compositions PBT + (Terpo GMA + Copo) en prémélange

L'exemple 18 reprend les conditions de l'exemple 15 mais en effectuant au préalable un précompound (Preblend dans le tableau) Terpo GMA / Copo EMA qui est introduit en mélange à sec avec le PBT.

Des performances similaires sont obtenues. Les exemples 19 et 20 mettent en évidence qu'il est possible de diluer fortement un Terpo GMA dans un EMA afin d'améliorer la fluidité du compound tout en conservant de bonnes résistances aux chocs.

<u>Tableau 4</u>

<u>comparatif 13</u> : PBT + 30 % FV référence de base renforcée

<u>comparatifs 14, 15</u> : PBT + 30 % FV + 10-15 % Terpo GMA 2

L'introduction en zone fondue des additifs est réalisée de la façon suivante. Dans un premier temps, la fibre de verre est introduite puis ultérieurement un Terpo GMA fortement réactif (Terpo 2).

Si les propriétés chocs sont excellentes, l'évolution de la fluidité par rapport à la base renforcée, non modifiée choc est trop importante et rhédibitoire pour les applications en injection.

<u>comparatif 16</u> : l'introduction du Terpo GMA préalablement à la fibre de verre accentue le phénomène.

<u>ex. 21, 22</u> : exemples similaires aux essais comparatifs 14 et 15 où le Terpo 2 est substitué par le Terpo 5. Les niveaux de choc obtenus sont satisfaisants et l'évolution de la fluidité est nettement moindre.

<u>ex. 23</u> : exemple similaire à l'exemple comparatif 16 où le Terpo 2 est substitué par le Terpo 5. Des conclusions identiques que pour les exemples 21, 22 peuvent être émises.

<u>comp. 17</u> : PBT + 30 % FV référence de base renforcée avec une résine PBT plus fluide (MFI 45 au lieu de 20).

<u>comp. 18, 19</u> : essais similaires aux exemples comparatifs 14 et 15 mais avec une résine PBT plus fluide (MFI 45). L'évolution de la fluidité est toujours aussi importante avec le Terpo 2 fortement réactif.

<u>ex. 24, 25</u> : essais similaires aux exemples 21, 22 mais avec une résine PBT plus fluide (MFI 45). Ces compositions permettent d'obtenir des performances similaires mais avec une faible évolution de la viscosité.

## Tableau 1

| Essai | Composition | (B) % | Choc CHARPY KJ/m² | | Module de flexion MPa | MFI dg/mn | % B x MFI (A + B) / MFI (A) |
|---|---|---|---|---|---|---|---|
| | | | 23°C | -20°C | | | |
| COMP.1 | PBT MFI 20 | 0 | 3.1 | 2.5 | 2260 | 20 | |
| COMP.2 | PBT MFI 20 + 20 % Acrylic elastomer | 20 | 16 | 9.2 | 1717 | 7.2 | 7.20 |
| COMP.3 | PBT MFI 20 + 20 % MBS | 20 | 18 | 11 | 1546 | 5.1 | 5.10 |
| COMP.4 | PBT MFI 20 + 10 % Terpo 1 | 10 | 10.2 | 8.2 | 1859 | 5.7 | 2.85 |
| COMP.5 | PBT MFI 20 + 15 % Terpo 1 | 15 | NB(48) | 9.4 | 1641 | 0.7 | 0.53 |
| COMP.6 | PBT MFI 20 + 20 % Terpo 1 | 20 | NB(75) | 9.8 | 1405 | 0.1 | 0.10 |
| COMP.7 | PBT MFI 20 + 10 % Terpo 2 | 10 | 12.7 | 6.4 | 1812 | 3.3 | 1.65 |
| COMP.8 | PBT MFI 20 + 15 % Terpo 2 | 15 | NB(45) | 8.9 | 1569 | 1.1 | 0.83 |
| COMP.9 | PBT MFI 20 + 20 % Terpo 2 | 20 | NB(90) | 10.6 | 1351 | 0.2 | 0.20 |
| EX.1 | PBT MFI 20 + 20 % Terpo 3 | 20 | NB(61) | 9.8 | 1450 | 3 | 3.00 |
| EX.2 | PBT MFI 20 + 20 % Terpo 4 | 20 | NB(57) | 13 | 1467 | 3.5 | 3.50 |
| EX.3 | PBT MFI 20 + 20 % Terpo 5 | 20 | NB(45) | 10.9 | 1393 | 4.2 | 4.20 |
| EX.4 | PBT MFI 20 + 10 % Terpo 4 | 10 | 26 | 9.1 | 1947 | 8 | 4.00 |
| EX.5 | PBT MFI 20 + 15 % Terpo 4 | 15 | NB(35) | 11 | 1665 | 4.8 | 3.60 |
| EX.6 | PBT MFI 20 + 20 % Terpo 4 | 20 | NB(57) | 13 | 1467 | 3.5 | 3.50 |

EP 0 963 412 B1

## Tableau 2

| Essai | Composition | (B) % | Choc CHARPY KJ/m² | | MFI dg/mn | $\dfrac{\text{\% B x MFI (A + B)}}{\text{MFI (A)}}$ |
|---|---|---|---|---|---|---|
| | | | 23°C | -20°C | | |
| | PBT MFI 70 | 0 | 3.1 | 2.7 | 69 | |
| COMP.10 | PBT MFI 70 + 15 % Terpo 2 | 15 | NB(45) | 12 | 12 | 2.61 |
| COMP.11 | PBT MFI 70 + 20 % Terpo 2 | 20 | NB (53) | 16.1 | 5.1 | 1.48 |
| EX.7 | PBT MFI 70 + 15 % Terpo 5 | 15 | 14.2 | 7.6 | 40 | 8.70 |
| EX.8 | PBT MFI 70 + 20 % Terpo 5 | 20 | NB(50) | 12.3 | 27.4 | 7.94 |
| EX.9 | PBT MFI 70 + 15 % Terpo 6 | 15 | NB(36) | 10.4 | 22.8 | 4.96 |
| EX.10 | PBT MFI 70 + 20 % Terpo 6 | 20 | NB(53) | 14.9 | 17.3 | 5.01 |
| EX.11 | PBT MFI 70 + 15 % Terpo 5 (450RPM) | 15 | NB(44) | 11 | 35.4 | 7.70 |
| EX.12 | PBT MFI 70 + 15 % Terpo 6 (450PRM) | 15 | NB(53) | 13.7 | 21 | 4.57 |

## Tableau 3

| Essai | Composition | (B) % ou (B1)+(C) | Choc CHARPY KJ/m² 23°C | Choc CHARPY KJ/m² -20°C | Module de flexion MPa | MFI dg/mn | % B x MFI (A + B) / MFI (A) ou % (B1+C) x MFI (A+B1+C) / MFI (A) |
|---|---|---|---|---|---|---|---|
|  | PBT MFI 10 |  | 3.5 | 2.8 | 2260 | 10 |  |
| COMP.12 | PBT MFI 10 + 20 % Terpo 2 | 20 | NB | 9.5 | 1410 | 0.1 | 0.20 |
| EX.13 | PBT MFI 10 + 20 % Terpo 4 | 20 | NB | 11 | 14.52 | 2 | 4.00 |
| EX.14 | PBT MFI 10 + 12 % Terpo 2 + 8 % COPO 1 | 20 | NB | 10 | 1380 | 1.5 | 3.00 |
| EX.15 | PBT MFI 10 + 8 % Terpo 2 + 12 % COPO 1 | 20 | NB | 10 | 1456 | 1.7 | 3.40 |
| EX.16 | PBT MFI 10 + 12 % Terpo 4 + 8 % COPO 1 | 20 | NB | 11 | 1488 | 3.9 | 7.80 |
| EX.17 | PBT MFI 10 + 8 % Terpo 4 + 12 % COPO 1 | 20 | NB | 11 | 1445 | 5.2 | 10.40 |
| EX.18 | PBT MFI 10 + 20 % Preblend (40 % Terpo 2 + 60 % COPO 1) | 20 | NB | 8.8 | 1425 | 1.5 | 3.00 |
| EX.19 | PBT MFI 10 + 20 % Preblend (20 % Terpo 2 + 80 % COPO 1) | 20 | NB | 8.3 | 1469 | 1.6 | 3.20 |
| EX.20 | PBT MFI 10 + 20 % Preblend (10 % Terpo 2 + 90 % COPO 1) | 20 | NB | 8.8 | 1482 | 2.4 | 4.80 |

## Tableau 4

| Essai | Composition | (B) % | Choc CHARPY KJ/m² | | Module de flexion MPa | MFI dg/mn | % B x MFI (A + B) MFI (A) |
|---|---|---|---|---|---|---|---|
| | | | 23°C | -20°C | | | |
| COMP.13 | PBT MFI 20 + 30 % FV | 0 | 7.6 | 7.3 | 7501 | 5.7 | |
| COMP.14 | PBT MFI 20 + 30 % FV + 10 % Terpo 2 | 10 | 14.2 | 10.8 | 5575 | 0.3 | 0.53 |
| COMP.15 | PBT MFI 20 + 30 % FV + 15 % Terpo 2 | 15 | 22.7 | 11.8 | 4863 | 0.1 | 0.26 |
| COMP.16 | PBT MFI 20 + 15 % Terpo 2 + 30 % FV | 15 | 22.5 | 11.9 | 5281 | 0.05 | 0.13 |
| EX.21 | PBT MFI 20 + 30 % FV + 10 % Terpo 5 | 10 | 10 | 8.3 | 5547 | 5.5 | 9.65 |
| EX.22 | PBT MFI 20 + 30 % FV + 15 % Terpo 5 | 15 | 14.7 | 9.1 | 3952 | 2.8 | 7.37 |
| EX.23 | PBT MFI 20 + 15 % Terpo 5 + 30 % FV | 15 | 9.8 | 8.2 | 4787 | 1.2 | 3.16 |
| COMP.17 | PBT MFI 45 + 30 % FV | 0 | 7.2 | 7.2 | 4991 | 27.6 | |
| COMP.18 | PBT MFI 45 + 30 % FV + 10 % Terpo 2 | 10 | 11.6 | 11.4 | 4459 | 1.5 | 2.63 |
| COMP.19 | PBT MFI 45 + 30 % FV + 15 % Terpo 2 | 15 | 21.9 | 12.1 | 3720 | 0.2 | 0.53 |
| EX.24 | PBT MFI 45 + 30 % FV + 10 % Terpo 5 | 10 | 12.9 | 9 | 4416 | 18.1 | 31.75 |
| EX.25 | PBT MFI 45 + 30 % FV + 15 % Terpo 5 | 15 | 14.6 | 10.6 | 4055 | 15 | 39.47 |

EP 0 963 412 B1

## EP 0 963 412 B1

### Revendications

1. Pièces injectées en polyester à base de polyester (A) tel que le polyéthylène téréphtalate (PET) ou le polybutylène téréphtalate (PBT). et d'un copolymère (B) de l'éthylène et d'un époxyde insaturé tel qu'un copolymère de l'éthylène, d'un (méth)acrylate d'alkyle et d'un époxyde insaturé, **caractérisées en ce que** ledit copolymère (B) est un mélange de (B1) et d'une polyoléfine (C), (B1) étant choisi parmi les copolymères (B), et (C) étant un copolymère éthylène - (méth)acrylate d'alkyle, et que lesdites pièces présentent un rapport % poids (B1 + C) x MFI (A + B1+ C) / MFI (A) qui est supérieur à 3, étant entendu que dans cette expression :

   MFI (A + B1 + C) désigne l'indice de fluidité du polyester modifié c'est-à-dire le mélange de (A), (B1) et (C), et des charges éventuelles,
   MFI (A) désigne l'indice de fluidité du polyester (A) et de charges éventuelles (sans (B)),
   % poids (B1 + C) désigne le pourcentage en poids de (B1) plus (C) dans le mélange de (A), (B1) et (C)et des charges éventuelles.

2. Pièces selon la revendication 1 dans lesquelles (B) contient jusqu'à 5 % et de préférence 1 à 3 % en poids d'époxyde.

3. Pièces selon l'une quelconque des revendications 1 et 2 dans lesquelles la quantité de (B) est de 10 à 25 % en poids de (B) + (A).

4. Pièces selon l'une quelconque des revendications précédentes dans lesquelles (B1) est un copolymère éthylène-(méth)acrylate d'alkyle-. (méth)acrylate de glycidyle.

5. Pièces selon l'une quelconque des revendications précédentes dans lesquelles (C) est un copolymère éthylène - acrylate de méthyle.

### Claims

1. Polyester injection-moulded parts based on a polyester (A), such as polyethylene terephthalate (PET) or poybutylene terephthalate (PBT), and on an ethylene/unsaturated expoxide copolymer (B), such as an ethylene/alkyl (meth)acrylate/unsaturated epoxide copolymer, **characterized in that** the said copolymer (B) is a blend of (B1) and of a polyolefin (C), (B1) being chosen from the copolymers (B), and (C) being an ethylene/alkyl (meth)acrylate copolymer, and **in that** the said parts have a [wt%(B1+C) x MFI(A+B1+C)/MFI(A)] weight ratio that is greater than 3, it being understood that in this expression:

   - MFI(A+B1+C) denotes the melt flow index of the modified polyester, i.e. the blend of (A), (B1) and (C) with any fillers;
   - MFI(A) denotes the melt flow index of polyester (A) with any fillers (without (B)); and
   - wt%(B1+C) denotes the percentage by weight of (B1)+(C) in the blend of (A), (B1) and (C) with any fillers.

2. Parts according to Claim 1, in which (B) contains up to 5%, and preferably from 1 to 3%, epoxide by weight.

3. Parts according to either of Claims 1 and 2, in which the quantity of (B) is from 10 to 25% of the weight of (B)+(A).

4. Parts according to any one of the preceding claims, in which (B1) is an ethylene/alkyl(meth)acrylate/glycidyl(meth) acrylate copolymer.

5. Parts according to any one of the preceding claims, in which C is an ethylene/methyl acrylate copolymer.

### Patentansprüche

1. Polyester-Spritzgußteile auf Basis eines Polyesters (A), wie Polyethylenterephthalat (PET) oder Polybutylenterephthalat (PBT) und eines Copolymers (B) von Ethylen und einem ungesättigten Epoxid, wie einem Copolymer von Ethylen, einem Alkyl(meth)acrylat und einem ungesättigten Epoxid, **dadurch gekennzeichnet, daß** es sich bei dem Copolymer (B) um eine Mischung von (B1) und einem Polyolefin (C) handelt, wobei (B1) unter den Copolymeren (B) ausgewählt ist und es sich bei (C) um ein Ethylen-Alkyl(meth)acrylat-Copolymer handelt, und daß die Teile ein Verhältnis Gew.-% (B1 + C) x MFI (A + B1 + C) / MFI (A) von mehr als 3 aufweisen, wobei in diesem Ausdruck:

MFI (A + B1 + C) für den Schmelzflußindex des modifizierten Polyesters, d.h. der Mischung von (A), (B1) und (C) und von gegebenenfalls vorhandenen Füllstoffen steht,

MFI (A) für den Schmelzflußindex des Polyesters (A) und von gegebenenfalls vorhandenen Füllstoffen (ohne (B)) steht,

Gew.-% (B1 + C) für den Gewichtsprozentanteil von (B1) plus (C) in dem Gemisch von (A), (B1) und (C) und von gegebenenfalls vorhandenden Füllstoffen steht.

2. Teile nach Anspruch 1, bei denen (B) bis zu 5 Gew.-% und vorzugsweise 1 bis 3 Gew.-% Epoxid enthält.

3. Teile nach Anspruch 1 oder 2, bei denen die Menge an (B) 10 bis 25 Gew.-% von (B) + (A) beträgt.

4. Teile nach einem der vorhergehenden Ansprüche, bei denen es sich bei (B1) um ein Ethylen-Alkyl(meth)-acrylat-Glycidyl(meth)acrylat-Copolymer handelt.

5. Teile nach einem der vorhergehenden Ansprüche, bei denen es sich bei (C) um ein Ethylen-Methylacrylat-Copolymer handelt.